# Europäisches Patentamt

# European Patent Office

# Office européen des brevets

(19)

(11) Veröffentlichungsnummer: **0 184 624**
**A2**

(12) **EUROPÄISCHE PATENTANMELDUNG**

(21) Anmeldenummer: 85111986.7

(22) Anmeldetag: 21.09.85

(51) Int. Cl.⁴: **H 04 Q 7/04**

(30) Priorität: 13.12.84 DE 3445470

(43) Veröffentlichungstag der Anmeldung: 18.06.86
Patentblatt 86/25

(84) Benannte Vertragsstaaten: FR GB IT NL SE

(71) Anmelder: **ANT Nachrichtentechnik GmbH,
Gerberstrasse 33, D-7150 Backnang (DE)**

(72) Erfinder: **Budnik, Norbert, Dipl.-Ing., Kantstrasse 23,
D-7150 Backnang (DE)**

(74) Vertreter: **Schickle, Gerhard, Dipl.-Ing., ANT
Nachrichtentechnik GmbH Patent- und Lizenzabteilung
Gerberstrasse 33, D-7150 Backnang (DE)**

(54) **Automatisches Funkfernsprechsystem mit ortsbeweglichen Sende-Empfangsstationen.**

(57) Automatisches Funkfernsprechsystem mit ortsfesten und beweglichen Sende- Empfangsstationen mit Überleiteinrichtungen zum öffentlichen Telefonnetz, wobei die Funküberleiteinrichtungen in Ortsvermittlungsstellen wie Großnebenstellenanlagen mit Durchwahl integriert sind. Teilnehmer von «beheimateten» beweglichen Funksprechstellen sind über eine Kennzahl ungleich 1 und ungleich 0 über die Funküberleiteinrichtungen, in deren Zuständigkeitsbereich sie sich befinden, direkt anwählbar von Teilnehmern, für welche diese Funküberleiteinrichtung die erste beim Aufbau des Gesprächs erreichte ist. Teilnehmer von beweglichen Funksprechstellen sind nicht mittels Impulswahl über diejenige Funküberleiteinrichtung, in deren Zuständigkeitsbereich sie sich befinden, direkt anwählbar von Teilnehmern, für welche diese Funküberleiteinrichtung nicht die erste beim Aufbau des Gesprächs erreichte ist. Bei der Wahl von der ersten zur zweiten Funküberleiteinrichtung wird die Nummer der anzuwählenden zweiten Überleiteinrichtung mit dem Kennzeichen «1» abgeschlossen, wonach die angewählte Durchwahlübertragung in der Vermittlungsstelle ein «Wahlende»-Kennzeichen abgibt. Der Sprechweg bis zu dieser zweiten Überleiteinrichtung wird durchgeschaltet. Die weiteren Wahlziffern werden mittels Tonfrequenzsignalen übertragen. Abschließend wird durchgeschaltet.

## Automatisches Funkfernsprechsystem mit ortsbeweglichen Sende- Empfangsstationen

Die Erfindung betrifft ein automatisches Funkfernsprechsystem gemäß Oberbegriff des Anspruchs 1.

Ein solches Funkfernsprechsystem ist vorgeschlagen worden beispielsweise durch die Deutsche Patentanmeldung P 34 06 501 (BK 83/ 167).

Nachteilig ist bei den bekannten Funkfernsprechsystemen, daß bei Aufbau einer Verbindung zu einem mobilen Funkfernsprechteilnehmer, welcher sich außerhalb des Bereichs seiner Heimatfunküberleiteinrichtung befindet, und welche Heimatfunküberleiteinrichtung nicht die erste Funküberleiteinrichtung ist, die der anwählende Teilnehmer erreicht, zwischen der Funküberleiteinrichtung, die der anwählende Teilnehmer als erste erreicht, und der Funküberleiteinrichtung, in deren Bereich der anzuwählende mobile Funkfernsprechteilnehmer sich gerade befindet, eine erhöhte Anzahl von Wahlimpulsen übertragen werden muß, nämlich einmal die Nummer der Funküberleiteinrichtung, bei der der anzuwählende Funksprechteilnehmer sich gerade befindet, sowie die Kennziffer des Funkfernsprechsystems und die komplette Nummer des anzuwählenden Funkfernsprechteilnehmers einschließlich der Nummer seiner Heimatfunküberleiteinrichtung. Das bedeutet, daß in der ersten erreichten Funküberleiteinrichtung diese ganze Wahlinformation zwischengespeichert werden muß. Es gibt ausländische Telefonsysteme (beispielsweise in Frankreich), bei denen alle Wahlorgane der Vermittlungstechnik wie Register, Wahlwiederholung usw. auf eine begrenzte Anzahl von Wahlimpulsen ausgelegt sind. Eine solche Technik ist also beispielsweise in Frankreich nicht möglich. Nachteilig ist aber auch, daß die langen Impulsfolgen eine relativ lange Verbindungsaufbauzeit ergeben.

Der vorliegenden Erfindung lag deshalb die Aufgabe zugrunde, ein Funkfernsprechsystem der eingangs genannten Art anzugeben, das es ermöglicht, eine Verbindung zu einem Funkfernsprechteilnehmer über zwei Funküberleiteinrichtungen auch mit Wahlorganen zu ermöglichen, die für eine begrenzte Anzahl von Wahlimpulsen ausgelegt sind. Außerdem sollte die Verbindungsaufbauzeit etwas kürzer sein als diejenige mit einer Durchreichung einer Folge von üblichen Wahlimpulsen.

Die Lösung erfolgt mit den gekennzeichneten Merkmalen gemäß des einzigen Anspruches.

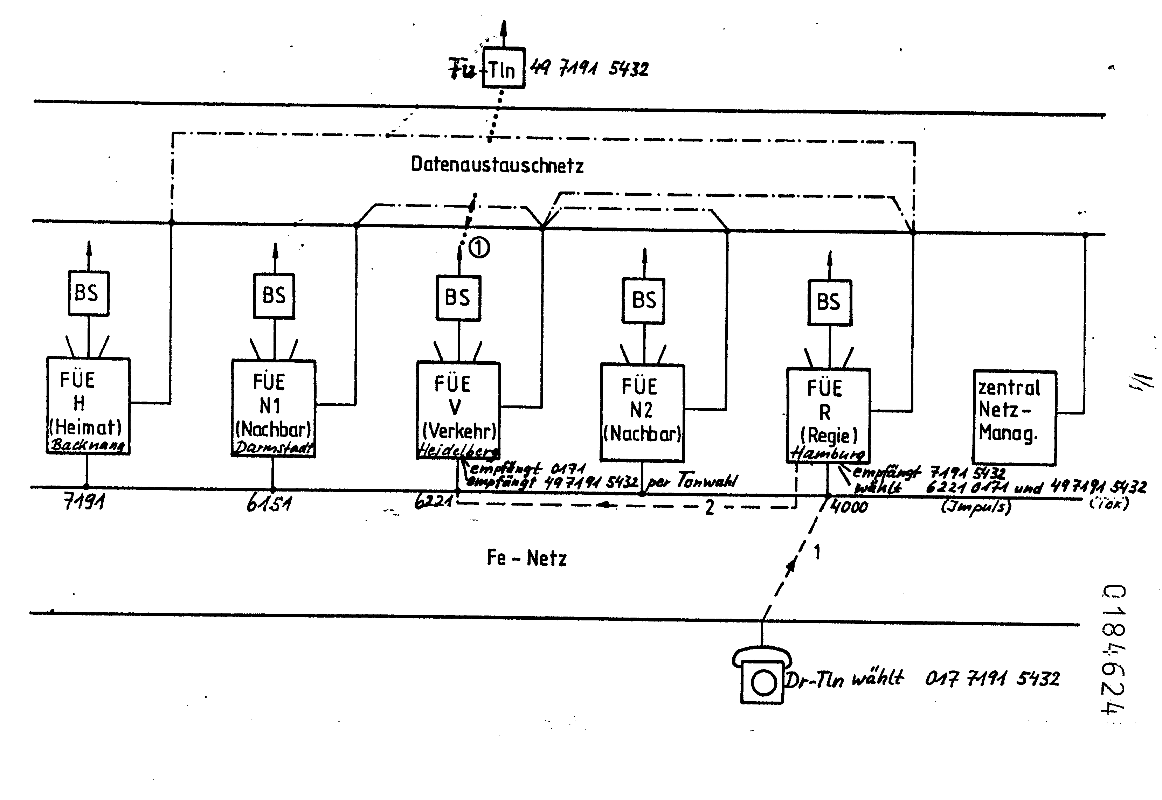

Es folgt nun die Beschreibung der Erfindung anhand der Figur.

Die Figur zeigt die Funkfernsprechnetzstruktur mit dem öffentlichen Fernsprechnetz Fe-Netz und einem Datenaustauschnetz, beispielsweise IDN. An das Fernsprechnetz sind Funküberleiteinrichtungen FÜE angeschlossen, an die mehrere ortsfeste Sende- Empfangsstationen BS angeschlossen sind. Über das Datenaustauschnetz können die Funküberleiteinrichtungen FÜE Informationen zur Anmeldung, Registrierung, Suchen, Weiterreichen, Aktualisierung des Standorts des mobilen Funkteilnehmers, Auf- und Abbau von Gesprächen usw. austauschen. Die ortsbeweglichen Funkteilnehmer Fu-Tln sind jeweils einer Heimatfunküberleiteinrichtung FÜE-H zugeordnet, in welcher ihre Adressen registriert sind. Verläßt ein ortsbeweglicher Funkteilnehmer seinen angestammten Funküberleiteinrichtungsbereich, so wird der neue Aufenthaltsort, d.h. die dafür zuständige Funküberleiteinrichtung FÜE-V, registriert. Die Registrierung wird laufend aktualisiert, so daß der jeweilige Funküberleiteinrichtungsbereich, in dem sich der ortsbewegliche Teilnehmer augenblicklich aufhält, in der Heimatfunküberleiteinrichtung FÜE-H stets bekannt ist. Diejenige Funküberleiteinrichtung, in der sich der mobile Funkteilnehmer augenblicklich aufhält, heißt FÜE-V, über sie wird sein Verkehr während seines Aufenthaltes in diesem Bereich einer ihr zugeordneten ortsfesten Sende- Empfangsstation BS abgewickelt. Die der Funküberleiteinrichtung FÜE-V benachbarten Funküberleiteinrichtungen heißen FÜE-N. Bei einem bereichsüberschreitenden Ortswechsel wird der Funkteilnehmer an eine
dieser benachbarten Funküberleiteinrichtungen übergeben. Die
Informationen über die Empfangsverhältnisse werden schon
zur Vorbereitung eines solchen Wechsels zwischen den beteiligten Funküberleiteinrichtungen über das Datenaustauschnetz ausgetauscht. Die erste, beim Aufbau eines Gesprächs erreichte Funküberleiteinrichtung heißt FÜE-R, in der Figur
über den Fernmeldeweg 1 von einem Teilnehmer Dr-Tln des Fernsprechdrahtnetzes erreicht. Sie führt übergeordnet Regie und
behält diese Funktion auch während des ganzen Gespräches bei.
Der Datenverkehr für den Aufbau, Abbau oder Wechsel eines Gesprächs zwischen der Heimatfunküberleiteinrichtung FÜE-H, der
den augenblicklichen Verkehr abwickelnden Funküberleiteinrichtung FÜE-V und den benachbarten Funküberleiteinrichtungen
FÜE-N läuft also über die regieführende Funküberleiteinrichtung
FÜE-R. Des weiteren ist eine Zentrale für Netzüberwachung und
-Management vorgesehen, welche Einbuchungen, Gebührenregistrierung, Berechtigungsüberprüfungen und Fehleranzeigen von
allen Funküberleiteinrichtungen übernimmt.

Bei einem Verbindungsaufbau vom ortsfesten Teilnehmer Dr-Tln
zum mobilen Teilnehmer Fu-Tln kommt der ortsfeste Teilnehmer
durch Wahl der Impulsfolge 017719 15432 über den Weg 1 zu einer
nächst gelegenen Funküberleiteinrichtung FÜE Hamburg, die damit zur regieführenden Funküberleiteinrichtung FÜE-R wird und
über das Datenaustauschnetz sofort bei der Heimateinrichtung
FÜE-H Backnang anfrägt, in welchem Funküberleiteinrichtungsbereich sich der mobile Teilnehmer gerade aufhält. Nach Feststellung des Aufenthaltortes, also Festlegung der FÜE-V,
wählt die regieführende Funküberleiteinrichtung FÜE-R die festgestellte FÜE-V Heidelberg mit deren Nummer 6221017 an, wobei
diese Nummer mit einer "1" abgeschlossen wird, wobei die angewählte Durchwahlübertragung in der Vermittlungsstelle sofort nach der ankommenden Belegung und der Wahl der "1" ein
"Wahlende"-Kennzeichen abgibt, womit für das Vermittlungsnetz
die Anlage als "erreicht" gilt. Damit ist der Sprechweg
vom Drahtteilnehmer bis zur Funküberleiteinrichtung

FÜE-V Heidelberg über die regieführende Funküberleiteinrichtung FÜE-R Hamburg, als Weg 1 und 2 gekennzeichnet,
durchgeschaltet. Es beginnt damit aber noch keine Gebührenzählung, diese beginnt erst nach dem "Beginnzeichen", das
normalerweise nach Abheben des gerufenen Teilnehmers gegeben
wird. Mit der Durchschaltung des Sprechweges ist jedoch die
Möglichkeit der Übertragung von Hörtönen (Besetztton bzw.
Freiton) möglich. Erfindungsgemäß wird nunmehr über den durchgeschalteten Sprechweg 2 zwischen den beiden Überleiteinrichtungen Hamburg und Heidelberg die komplette Rufnummer
4971915432 des gewünschten Funkteilnehmers mit Hilfe von Tonfrequenzsignalen übertragen. Hierbei ist ein Zwei- oder Mehrtonverfahren möglich. Eine solche Übertragung ist sehr schnell,
so daß die Wartezeit für den rufenden Teilnehmer zumutbar
klein wird (ca. 400 ms).
Erfindungsgemäß erhalten alle örtlich bei der Heimatfunküberleiteinrichtung registrierten Funkteilnehmernummern an
der ersten Stelle eine Ziffer ungleich 0 oder ungleich 1,
was eine entsprechende Weiterwahl mittels des Impulswahlverfahrens und direkte Durchschaltung des Sprechweges bis zum
angewählten Funkteilnehmer gestattet. Ein solches Verfahren
gibt also hierfür keine Einschränkungen, es könnten jedoch
"normale Drahtteilnehmer" daran gehindert werden, durch entsprechende Manipulationen "Funküberleitverbindungen, die zu
Gastteilnehmern" führen, über die "1" kostenlos zu erhalten.

*5*
- *X* -

ANT Nachrichtentechnik GmbH          E7/Ruf/hi
Gerberstr. 33                        BK 84/15
D-7150 Backnang

Patentansprüche

1. Automatisches Funkfernsprechsystem mit ortsfesten und ortsbeweglichen Sender- Empfangsstationen, wobei die ortsfesten
Sende- Empfangsstationen eines Funkverkehrsbereiches über
eine zugeordnete Überleiteinrichtung mit dem öffentlichen
Telefonnetz in Verbindung stehen und wobei eine Funkverbindung zwischen einem Teilnehmer einer beweglichen Funksprechstelle und einem Teilnehmer einer Fernsprechstelle
des öffentlichen Fernsprechnetzes oder mit einem Teilnehmer
einer beweglichen Funksprechstelle in einem anderen Funkverkehrsbereich über die den beiden Teilnehmern zugeordneten
Funküberleiteinrichtungen mittels Wahl einer vorgegebenen
Anzahl von Impulsen aufgebaut wird und wobei die Überleiteinrichtungen untereinander über ein Datenaustauschnetz,
insbesondere über das integrierte Datennetz IDN, verbunden
sind, in dem Prozeduren zur Anmeldung, Registrierung,
Suchen, Weiterreichen, Aktualisierung des Standorts, Auf-
und Abbau von Gesprächen abgewickelt werden, und wobei die
ortsbeweglichen Sende- Empfangsstationen über eine Anzahl
Duplexsprechkanäle mit einer oder mehreren der ortsfesten
Sende- Empfangsstationen verbunden werden können, dadurch gekennzeichnet, daß die Funküberleiteinrichtungen (FÜE)
in Ortsvermittlungsstellen (OVSt) wie Groß-Nebenstellenanlagen mit Durchwahl integriert sind,

daß die Teilnehmer von beweglichen Funksprechstellen
(Fu-Tln) der ersten Art über eine Kennzahl ungleich 1
und ungleich 0 über die Funküberleiteinrichtung (FÜE-V),
in deren Zuständigkeitsbereich sie sich befinden, direkt
anwählbar sind von Teilnehmern, für welche diese Funküberleiteinrichtung die erste (FÜE-V = FÜE-R) beim Aufbau des Gesprächs erreichte Funküberleiteinrichtung ist, daß die Teilnehmer von beweglichen Funksprechstellen
(Fu-Tln) einer zweiten Art nicht mittels Impulswahl über
diejenige Funküberleiteinrichtung, in deren Zuständigkeitsbereich sie sich befinden, direkt anwählbar sind
von Teilnehmern (Dr-Tln), für welche diese Funküberleiteinrichtung nicht die erste beim Aufbau des Gesprächs
erreichte Funküberleiteinrichtung sondern die zweite
Funküberleiteinrichtung (FÜE-R ✦ FÜE-V) ist, daß bei der Wahl von der ersten (FÜE-R) zur zweiten
(FÜE-V) Funküberleiteinrichtung die Nummer (622117) der
anzuwählenden zweiten Funküberleiteinrichtung (FÜE-V)
mit dem Kennzeichen "1" abgeschlossen wird, wonach die
angewählte Durchwahlübertragung in der Vermittlungsstelle (4000) sofort anschließend ein "Wahlende-Kennzeichen" abgibt,

daß damit für das Vermittlungsnetz die Anlage als "erreicht" gilt und der Sprechweg ( 1 + 2 ) bis zu dieser
zweiten Funküberleiteinrichtung (FÜE-V) durchgeschaltet
wird,

daß danach über diesen durchgeschalteten Sprechweg ( 1 )
zwischen den beiden Funküberleiteinrichtungen (FÜE-R ➔ FÜE-V)
mittels Tonfrequenzsignalen die weiteren Wahlziffern
(49 71 91 54 32) übertragen werden und

daß Mittel in den Funküberleiteinrichtungen (FÜE) vorhanden sind, welche die Umsetzung der Tonfrequenzwahlsignale in Steuersignale und die Durchschaltung des
Restsprechweges (①) zu den Teilnehmern der zweiten Art
(Fu-Tln) ermöglichen.

Fu-Tln  49 7191 5432

Datenaustauschnetz

BS  BS  BS  BS  BS

① 

FÜE
H
(Heimat)
*Backnang*

FÜE
N1
(Nachbar)
*Darmstadt*

FÜE
V
(Verkehr)
*Heidelberg*

FÜE
N2
(Nachbar)

FÜE
R
(Regie)
*Hamburg*

zentral
Netz-
Manag.

*empfängt 0171*
*empfängt 49 7191 5432 per Tonwahl*

*empfängt 7191 5432*
*wählt 6221 0171 und 49 7191 5432*

7191    6151    6221    4000    *(Impuls)*    *(Ton)*

2

Fe - Netz

1

*Dr-Tln wählt  017 7191 5432*